# EUROPÄISCHE PATENTSCHRIFT

(11) **EP 2 894 962 B1**
(45) Veröffentlichungstag und Bekanntmachung des Hinweises auf die Patenterteilung: **04.04.2018**
(21) Anmeldenummer: 13771078.6
(22) Anmeldetag: 09.09.2013
(51) Int. Cl.: A01D 89/00

(54) **ERNTEGUTAUFNEHMER**
HARVESTED CROP PICK-UP
RÉCOLTEUSE

(30) Priorität: 17.09.2012 DE 102012108708
(43) Veröffentlichungstag der Anmeldung: 22.07.2015
(73) Patentinhaber: Reiter, Thomas, 4707 Schlüsselberg (AT)
(72) Erfinder: Reiter, Thomas, 4707 Schlüsselberg (AT)
(74) Vertreter: Puschmann Borchert Bardehle Patentanwälte Partnerschaft mbB
(86) Internationale Anmeldenummer: PCT/EP2013/068619
(87) Internationale Veröffentlichungsnummer: WO 2014/040953

(56) Entgegenhaltungen:
- EP-A1- 1 362 506
- DD-A1- 143 496
- DE-A1- 2 753 101
- DE-U1-202010 010 038

## Beschreibung

Die Erfindung betrifft einen Erntegutaufnehmer, der Fortbewegungsmittel umfasst, wobei zur Erntegutaufnahme eine rotierende Welle vorgesehen ist, die zwischen Lagerelementen eines Rahmens geführt ist.

Nach dem Stand der Technik weisen rotierende Erntegutaufnehmer, sogenannte Pick-UPs, Zinkenträger auf, die radial außen um ein Zentralrohr angeordnet sind und mit diesem verbunden sind. Durch Drehung des Zentralrohres wird durch die an den Zinkenträgern angebrachten Zinken das Erntegut vom Boden aufgenommen und in einen Auffangbereich gefördert.

Von besonderer Bedeutung ist der Abstand, den die Zinken vom Boden haben. Dieser wird in bekannter Weise bei radgetragenen Pick-UPs durch separate Tasträder oder Tastkufen bestimmt und eingestellt.

Eine solche Anordnung von mehreren Wellenteilen, die über starre Rahmen verbunden sind ist in der DE 20 2010 010 038 U1 offenbart.

Die DE 91 13475 U1 offenbart ein zwischen zwei Rahmen an einem starren Joch befestigtes torsionsweiches Profil, in welchem die Welle mit außen am Rahmen befestigten Rädern geführt wird. Ähnlich offenbart die DD PS 143 496 eine an einem starren Joch federnd oder gelenkig aufgehängte Wellenlager, die mit tragenden Kufen verbunden sind und eine flexible Welle tragen. Ferner sind Abstreifer vorgesehen, die ebenfalls mit der Welle verbunden sind und federnd oder gelenkig am starren Joch befestigt sind. Bei Bodenunebenheiten führt diese Anordnung zu einem axialen Versatz der Zinken zu den Abstreifern.

Solche Pick-UPs haben jedoch den Nachteil, dass in der Regel nur Arbeitsbreiten von etwa 2 bis 3 Metern realisierbar sind, ohne bei unebenen Bodenverhältnissen einen erheblichen Schmutzeintrag oder zu hohe Rechverluste zu erzeugen.

Es ist Aufgabe der Erfindung, das Aufnahmeverhalten eines Erntegutaufnehmers zu verbessern und größere Arbeitsbreiten bei geringerem Schmutzeintrag und bei weniger Rechverlusten zu realisieren.

In bekannter Weise umfasst ein Erntegutaufnehmer wenigstens drei Fortbewegungsmittel. Die Fortbewegungsmittel sind über zumindest ein Joch verbunden. Ferner sind Tragelemente vorgesehen, die mit dem Joch und den Fortbewegungsmitteln verbunden sind und ein Wellenlager aufweisen. In dem Wellenlager ist eine Welle geführt, die wiederum mit Aufnahmewerkzeugen zur Erntegutförderung verbunden ist.

Das Joch ist erfindungsgemäß derart elastisch verformbar, dass eine Relativbewegung vertikal zur Jochachse wenigstens eines weiteren Fortbewegungsmittels, das zwischen den zwei äußeren Fortbewegungsmitteln angeordnet ist, ermöglicht wird. Die an Joch und / oder den Fortbewegungsmitteln befestigten Tragelemente sind aufgrund der elastischen Verformbarkeit des Jochs ebenfalls in vertikaler Richtung gegeneinander bewegbar.

Insbesondere weist ein Fortbewegungsmittel im Sinne der Erfindung eine Aufstandsfläche auf, über die das Fortbewegungsmittel über die Bodenkontur geführt wird. Durch den vertikalen Versatz axial beabstandeter Aufstandsflächen bzw. Fortbewegungsmittel wird das Joch elastisch verformt.

Durch die Lagerung der Welle an den in vertikaler Richtung gegeneinander bewegbaren Tragelementen kann der Abstand der Aufnahmewerkzeuge zum Boden, der im Wesentlichen durch die Aufbauhöhe des Fortbewegungsmittels oder durch Höhenverstelleinheiten eingestellt ist, über eine Vielzahl von solch gestalteten Segmenten ohne zusätzliche Aktorik bei sich verändernder Bodenkontur über die gesamte Breite des Erntegutaufnehmers an die Bodenkontur angepasst werden.

Die elastische Verformbarkeit des Jochs kann vorzugsweise so ausgelegt sein, dass bei einem Joch von 3 m Länge eine Durchbiegung in der Jochmitte in vertikaler Richtung zur Jochachse von mindestens 2 cm möglich ist. Eine ideale Bodenanpassung wird mit einer elastischen Verformung ab einer Auslenkung von wenigstens 4 cm oder wenigstens 5 cm auf 3 m Jochlänge erreicht.

Vorteilhaft erweist sich eine Ausgestaltung, bei dem alle Fortbewegungsmittel über ein einziges Joch verbunden sind. Dies sorgt für eine gleichmäßige Bodenanpassung. Eine besonders einfache Gestaltung erreicht man durch eine einstückige Ausgestaltung des Jochs.

Vorzugsweise sind die Tragelemente und die Fortbewegungsmittel in axialer Richtung des Jochs versatzlos oder mit geringem Versatz an dem Joch angeordnet.

Insbesondere sind die Fortbewegungsmittel in axialer Richtung des Jochs und in Fahrtrichtung fest. Die gewünschte Flexibilität der Anordnung wird insbesondere durch die Wahl des Querschnitts und des Materials des Jochs bestimmt. Besonders die Form und Dimension des Querschnitts des Jochs sind daher entscheidend.

Querschnitt und Material des Jochs sind vorzugsweise so gewählt, dass ein vertikaler Versatz der Fortbewegungsmittel zu einer bogenförmigen elastischen Verformung des die Fortbewegungsmittel verbindenden Jochs führt.

Durch die flexible Lagerung der Welle und damit der Aufnahmewerkzeuge, können durch die Erfindung Arbeitsbreiten realisiert werden, die ein Vielfaches der mit herkömmlichen Systemen erzielbaren Arbeitsbreiten darstellen.

Die Tragelemente sind vorzugsweise an oder in der Nähe der Fortbewegungsmittel, bzw. der Lagerböcke angebracht. Dies hat den Vorteil, dass eine verbesserte Konturverfolgung des zu bearbeitenden Bodens gewährleistet ist.

Die Tragelemente können neben der Befestigung am Joch auch zusätzlich mit den Fortbewegungsmitteln oder ausschließlich an den Fortbewegungsmitteln befestigt sein. Dies sorgt dafür, dass Radialkräfte der Welle direkt abgeleitet werden können, ohne das Joch zu beeinflussen.

Ferner kann die Aufteilung des Erntegutaufnehmers bevorzugt so gewählt werden, dass zwischen zwei Tragelementen mit ihren Wellenlagern eine Vielzahl von Aufnahmewerkzeugen angeordnet sind.

Neben den Tragelementen können auch sogenannte Abstreifer vorgesehen sein, um die Loslösung des Ernteguts von den Aufnahmewerkzeugen zu verbessern. Die Abstreifer sind vorzugsweise als einzelne Abstreifelemente realisiert und jeweils zwischen den Aufnahmewerkzeugen eingebracht.

Vorzugsweise kann die Welle wenigstens teilweise flexibel ausgebildet sein, wobei über die Lagerunng der Welle über die mit dem Joch verbundenen Tragelmente sich eine im Wesentlichen identische Biegelinie von Joch und Welle einstellt.

Durch die elastische Ausgestaltung des Jochs und der an dieses angepasste flexible Welle, werden Abstreifer und Aufnahmewerkzeuge mit derselben Neigung beaufschlagt. Dadurch kann eine Bodenanpassung ermöglicht werden, ohne dass die Aufnahmewerkzeuge zwischen den Abstreifern verklemmen, da die Aufnahmewerkzeuge und Zinken im selben Winkel geneigt werden.

Da die Abstreifelemente ebenfalls einzeln an dem Joch befestigt sind, bleibt die Flexibilität des Jochs erhalten. Ferner kann eine einfache Wartung des Aufnahmewerkzeugs nach Demontage einzelner Abstreifelemente vorgenommen werden.

Insbesondere sind die Aufnahmewerkzeuge ebenfalls einzeln an der Welle befestigt. Auf diese Weise wird die Verformung der Welle im Wesentlichen entlang der Biegelinie des Jochs ermöglicht, da es durch die einzeln befestigten Aufnahmewerkzeuge nicht zu einer Behinderung der Verformung der Welle kommt. Dadurch kann bei einer Veränderung der Bodenkontur die axiale Abstandsveränderung zwischen Aufnahmewerkzeugen und Abstreifelementen in engen Grenzen gehalten werden, wodurch ein Verkannten vermieden und zuverlässige Funktionsfähigkeit gewährleistet wird.

In einer alternativen Ausführungsform können die Abstreiferelemente auch in Gruppen am Joch befestigt sein. Dies erleichtert die Montage und Demontage und gewährleistet dennoch eine gewisse Winkelanpassung der Abstreiferelemente gegenüber den Aufnahmewerkzeugen.

In einer weiteren vorteilhaften Ausgestaltung können auch die an der Welle befestigten Aufnahmewerkzeuge in Gruppen an dieser montiert sein. Durch die gruppierte Anordnung ergibt sich eine erleichterte Montage, da die gesamte Gruppe gleichzeitig in einem Arbeitsschritt montiert werden kann.

Vorzugsweise ist die Gruppengröße der Aufnehmer der der Abstreifer angepasst.

Vorzugsweise können auch die Tragelemente in Form von Abstreifern ausgebildet sein, um ein durchgängiges Abstreifen des Aufgenommenen Ernteguts vom Aufnahmewerkzeug zu gewährleisten.

In einer besonders vorteilhaften Ausführungsform sind die Fortbewegungsmittel in Form von Kufen ausgebildet. Dies stellt eine besonders kostengünstige und robuste Form dar und sorgt gleichzeitig für eine sehr direkte Übertragung von Bodenkonturen auf das Joch. Alternativ können die Fortbewegungsmittel auch in Form von Rädern oder Walzen ausgebildet sein.

Sind Kufen als Fortbewegungsmittel vorgesehen, kann das Joch über Lagerböcke, die an den Kufen angebracht sind, mit diesen verbunden werden.

Das Joch ist vorzugsweise in Form eines Flachprofils ausgebildet. Dieses ist sowohl bezüglich Torsion als auch in der Richtung der geringen Querschnittshöhe, die vorzugsweise vertikal ausgerichtet ist, flexibel. In axialer Richtung des Jochs und in Fahrtrichtung können die Fortbewegungsmittel auf einem Flachprofil auf einfache Weise gegeneinander festgelegt werden. Durch ein Flachprofil wird auch auf einfache Weise die Voraussetzung für eine einfache formschlüssige Montage von Tragelementen und Abstreifern geschaffen. Das Flachprofil umfasst insbesondere mehrere Lagen.

Die Aufnahmewerkzeuge sind, wie für viele Anwendungen üblich, als sogenannte Zinken, insbesondere Federzinken, ausgebildet. Eine Vielzahl von Zinken, vorzugsweise 4 bis 8, kann zur drehfesten Verbindung mit der Welle am Außenumfang einer Scheibe montiert sein. Indem die Zinken über eine Scheibe an der Welle befestigt werden, kann der Durchmesser der Antriebswelle reduziert werden, wodurch die Flexibilität der Welle verbessert wird. Trotzdem kann durch den Scheibendurchmesser die Zinkenlänge relativ kurz gehalten werden, wodurch deren Stabilität verbessert wird und die Standzeit erhöht wird.

Zur Übertragung der Drehbewegung der Welle auf die Aufnahmewerkzeuge bietet sich eine formschlüssige Verbindung an. Besonders günstig hat sich dafür eine Welle aus einem Sechskant- oder Achtkantprofil erwiesen, welche von korrespondierenden Ausnehmungen des Aufnahmewerkzeugs umfasst werden. Bei einer vieleckigen Welle kann abhängig von der Kanteanzahl kann ein umfänglicher Veratz der Aufnahmewerkzeuge eingesetellt werden.

Das Aufnahmewerkzeug kann auch wenigstens zweiteilig ausgebildet, wobei eine Verbindung der Wenigstens zwei Teile das Aufnahmewerkzeug drehfest mit der Welle verbinden

Vorzugsweise kann bei einer Verbindung von mehreren Tragelementen eine mehrteilige Welle eingesetzt werden. Dies erhöht zusätzlich die Flexibilität des Erntegutaufnehmers und verbessert die Anpassung an die Bodenkonturen. Die mehrteilige Welle kann in ihren Einzelabschnitten je nach Länge starr oder flexibel ausgebildet sein.

Die Tragelemente können zur Winkelsteuerung der Aufnahmewerkzeuge Kurvenbahnen aufweisen.

In einer weiteren vorteilhaften Ausführungsform kann der Erntegutaufnehmer in oder entgegen der Fahrtrichtung beabstandet einen Stabilisator aufweisen, der die Fortbewegungsmittel parallel zur Achse des Jochs stabilisiert.

Dieser Stabilisator kann ähnlich dem Joch flexibel als Flachprofil oder in der Art eines Torsionsstabs ausgebildet sein.

Vorzugsweise liegen die Welle, das Joch und der Stabilisator im Wesentlichen in einer Ebene.
In einer weiteren vorteilhaften Ausführungsform, sind das Joch, die Welle und die Verbindungselemente, insbesondere deren Lagerpunkte, die den Erntegutaufnehmer mit einer Zugmaschine oder Ladefahrzeug verbinden in einer Ebene angeordnet.

Indem die parallel zur Trägereinheit und zur Welle liegenden Verbindungs- oder Stabilisierungseinrichtungen im Wesentlichen in derselben Ebene wie Welle und Joch liegen, ist der Erntegutaufnehmer in Fahrtrichtung und quer zur Fahrtrichtung ideal stabilisiert, kann sich aber dennoch leicht in vertikaler Richtung verformen und an die Bodenkontur anpassen. Dadurch werden innere Spannungen insbesondere hohe Lagerquerkräfte an der Welle vermieden.

Durch die erfindungsgemäße Ausgestaltung kann der Schmutzeintrag und das Eindringen von Fremdkörpern in das Erntegut erheblich reduziert werden, da ein Eingreifen der Aufnahmewerkzeuge in den Boden nur in Grenzsituationen erfolgt. Diese Verbesserung kann auch über große Arbeitsbreiten aufrechterhalten werden, da die einzelnen Segmente, zwischen den Fortbewegungsmitteln, gegeneinander flexibel gelagert sind und sich daher der erfindungsgemäße Erntegutaufnehmer über eine große Breite der Bodenkontur anpassen kann.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in den Zeichnungen werden die in der unten aufgeführten Liste der Bezugzeichen verwendeten Begriffe und zugeordneten Bezugzeichen verwendet. Es zeigen:
- Fig. 1: eine perspektivische Teilansicht eines erfindungsgemäßen Erntegutaufnehmers,
- Fig. 2: eine perspektivische Detailansicht des Jochs des erfindungsgemäßen Erntegutaufnehmers,
- Fig. 3: eine perspektivische Detailansicht der Welle des erfindungsgemäßen Erntegutaufnehmers;
- Fig. 4: eine perspektivische Ansicht der Abstreifer des erfindungsgemäßen Erntegutaufnehmers;
- Fig. 5: eine schematische Seitenansicht eines Erntegutaufnehmers, und
- Fig. 6: eine Darstellung eines Erntegutaufnehmers.

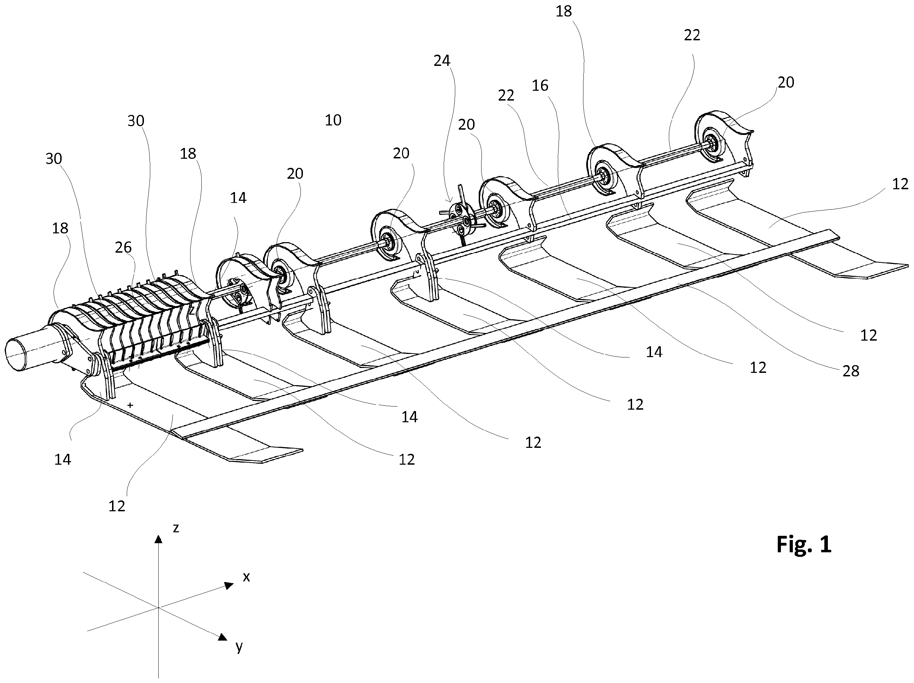

Fig. 1 zeigt einen Erntegutaufnehmer 10, der zur besseren Fortbewegung sieben Kufen 12 als Fortbewegungsmittel aufweist, wobei die Kufen 12 jeweils mit einem Lagerbock 14 verbunden sind. Zur übersichtlicheren Darstellung ist der Lagerbock 14 nicht für alle Kufen 12 dargestellt. Die Lagerböcke 14 aller Kufen 12 sind mit dem Joch 16 verbunden. Das Joch 16, das in diesem Anwendungsbeispiel als stählernes Flachprofil ausgebildet ist, sorgt dafür, dass die Lagerböcke 14 und die Kufen 12 in vertikaler Richtung z gegeneinander verschiebbar sind. In den übrigen Richtungen x und y bleiben die Lagerböcke 14 nebst Kufen 12 im Wesentlichen in festem Abstand angeordnet. Durch das Bereitstellen einer gewissen Flexibilität des Jochs 16 in z-Richtung, können sich die Kufen 12 gleichzeitig auf unterschiedlichen Höhen befinden.

Ferner sind Tragelemente 18 vorgesehen, die gleichsam mit den Lagerböcken 14 und dem Joch 16 verbunden sind. Naturgemäß führen durch diese Anordnung die Tragelemente 18 die gleiche Bewegung aus wie die daran angebundenen Kufen 12. In den Tragelementen 18 sind jeweils Wellenlager 20 vorgesehen, die eine angetriebene Welle 22 drehbar lagern.

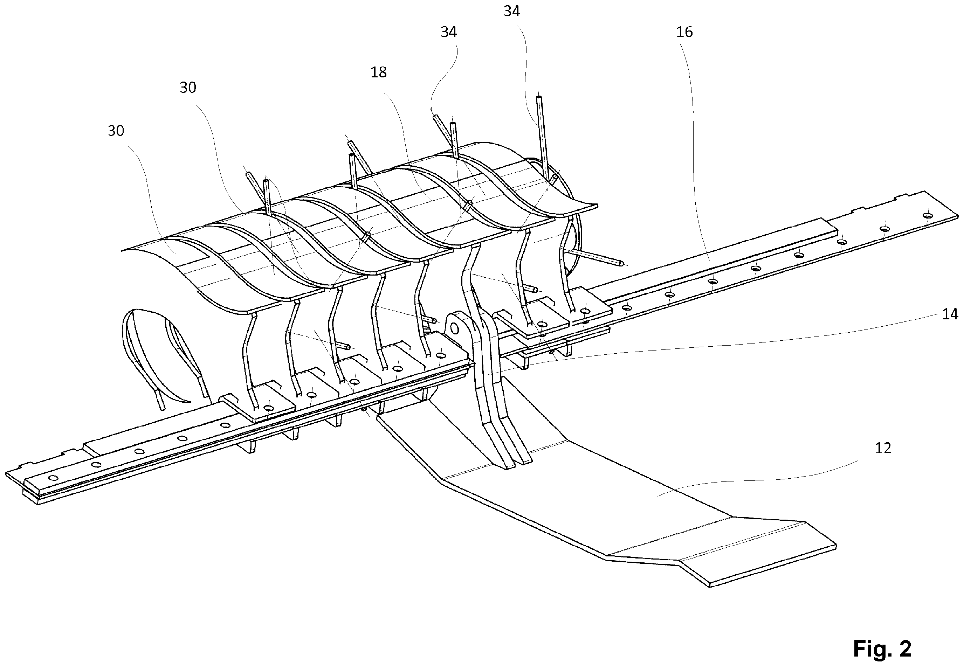

Zur Erntegutaufnahme sind an der Welle 22 Aufnahmewerkzeuge 24 mit federgelagerten Zinken vorgesehen. Die Ausbildung der Aufnahmewerkzeuge 24 wird in Fig. 2 näher erläutert. Durch die Drehung der Zinken um die Welle 22 wird Erntegut vom Boden abgehoben und in einen Aufnahmebereich, der in Fahrtrichtung hinter der Antriebswelle liegt, befördert. Wie in einem ersten Segment 26, das zwischen zwei Kufen 12 gebildet ist, dargestellt ist, sind zwischen zwei Tragelementen 18 eine Vielzahl von Aufnahmewerkzeugen 24 angeordnet.

Zur Verbesserung der Stabilisierung des Erntegutaufnehmers 10 ist am in Fahrtrichtung rückwärtigen Ende des Erntegutaufnehmers 10 ein Stabilisator 28 angeordnet, der die hinteren Enden der Kufen 12 verbindet und dadurch die Stabilität des Erntegutaufnehmers in x- und y-Richtung unterstützt, jedoch die vertikale Bewegung der Elemente gegeneinander in z-Richtung zulässt.

Der Stabilisator 28 ist, wie auch das Joch 16, im Querschnitt insbesondere Querschnittsdimension und Querschnittsform zusammen mit der Materialwahl so abgestimmt, dass er diese Funktion ausführen kann. Eine besonders einfache Ausgestaltung, um dies zu gewährleisten, ist durch ein stählernes Flachprofil, wie in Fig. 1 gezeigt, gegeben.

Durch die erfindungsgemäße Anordnung passen sich die einzelnen Segmente 26, die zwischen zwei Kufen 12 liegen, den Bodenunebenheiten an. Dadurch werden die zwischen den Kufen 12 liegenden Aufnahmewerkzeuge 24 in einem festen Abstand immer in Bodennähe geführt. Da durch die erfindungsgemäße Ausgestaltung ein fester definierter Abstand zum Boden eingehalten werden kann, wird Schmutzeintrag und Leistungsverlust durch Eingriff der Aufnahmewerkzeuge 24 in den Boden vermieden.

Zwischen den Aufnahmewerkzeugen 24 sind zusätzlich Abstreifelemente 30 angeordnet um das von den Aufnahmewerkzeugen 24 aufgenommene Erntegut möglichst verlustfrei über die Welle 22 in den Aufnahmebereich des Erntegutaufnehmers 10 zu befördern. Durch die abwechselnde Aneinanderreihung von Abstreifern 30 und Aufnahmewerkzeugen 24 ergibt sich eine kammartige Struktur, in deren Zwischenraum die Zinken 34 der Aufnahmewerkzeuge 24 bei geringem Abstand von Zinken 34 zu Abstreifern 30 rotieren und so das Erntegut entlang der Abstreifer 30 in den Aufnahmebereich führen.

Fig. 2 zeigt einen Ausschnitt des erfindungsgemäßen Erntegutaufnehmers 10, wobei eine Kufe 12 dargestellt ist, die über ihren Lagerbock 14 mit dem Joch 16 und dem Tragelement 18 verbunden ist. An dieser Darstellung ist gut erkennbar, dass die Abstreifer 30 einzeln an dem Joch 16 montiert sind. Durch die einzelne Montage wird die Flexibilität des Jochs bewahrt und trotzdem eine stabile Halterung der einzelnen Abstreifer 30 gewährleistet.

In vorteilhafter Weise sind die einzelnen Abstreifer 30 über eine u-förmige Ausnehmung formschlüssig mit dem Flachprofil verbunden. Um auch in Fahrtrichtung fixiert zu sein, können diese mit dem Joch 16 verschraubt werden. Die Abstreifer 30 sind derart gestaltet, dass sie die Welle 22 weiträumig umgreifen, wodurch eine freie Drehbarkeit der Welle 22 gewährleistet ist, ohne dass die Welle an den Abstreifern 30 anschlägt.

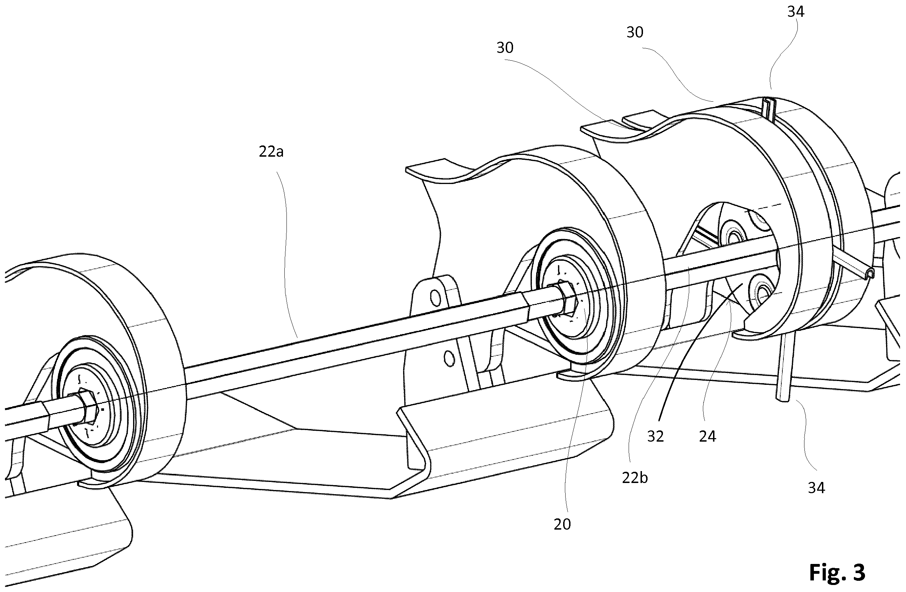

Fig. 3 zeigt eine perspektivische Ansicht des Erntegutaufnehmers 10, bei dem eine Sechskantwelle 22 die in die Tragelemente 18 eingepressten Wellenlager 20 durchragt.

Besonders deutlich ist an dieser Darstellung das Aufnahmewerkzeug 24 zu erkennen. Dieses umfasst im Wesentlichen eine Zinkenscheibe 32, bei welchem über den Umfang verteilt, Federzinken 34 herausragen. Die Zinkenscheibe 32 selbst weist eine mit der Welle 22 korrespondierende Sechskantausnehmung auf, die formschlüssig von der Sechskantwelle 22 durchragt wird. In dieser Darstellung ist zu erkennen, dass die Welle 22 aus einzelnen Wellenteilen 22a, 22b, gebildet wird. Dies hat insbesondere bei rein aufsteckbaren Aufnahmewerkzeugen 24 den Vorteil, dass nur einzelnen Segmente demontiert werden müssen, um gezielt Reparaturen bzw. Ersetzungen an Aufnahmewerkzeugen 24 vornehmen zu können.

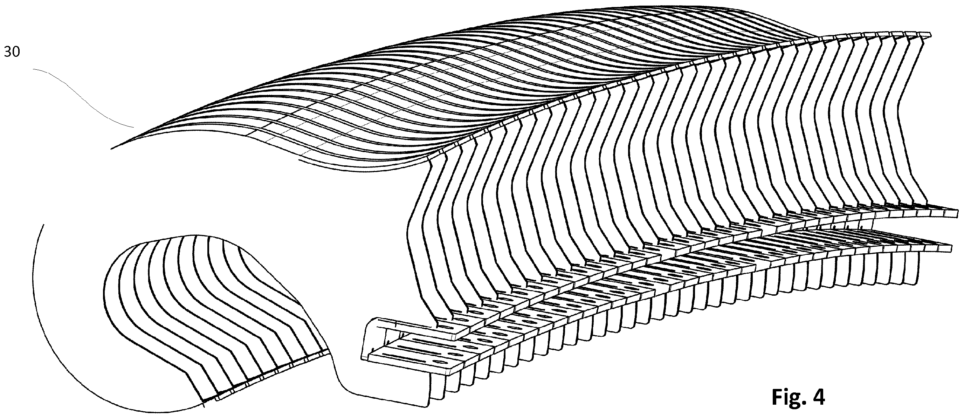

Fig. 4 zeigt eine Ansicht des Erntegutaufnehmers, bei dem alle Bauteile bis auf die Abstreifer 30 ausgeblendet sind, wobei an dieser Darstellung besonders eine bogenförmige elastische Verformung des Erntegutaufnehmers bei vertikalem Versatz der Kufen 12 gezeigt werden kann.

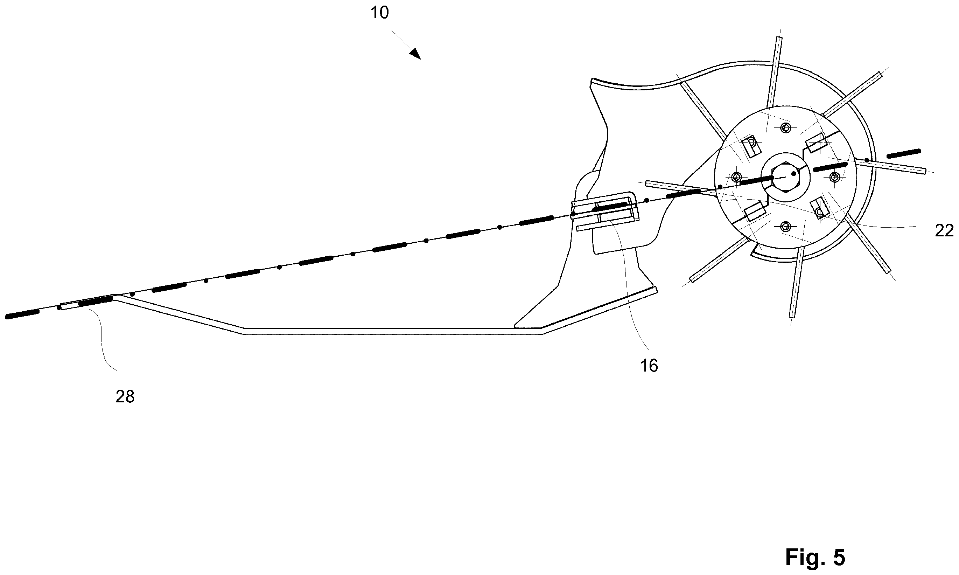

Fig. 5 zeigt die schematische Seitenansicht eines Erntegutaufnehmers 10 wie in Fig. 1 dargestellt. In dieser Darstellung wird deutlich, dass die Welle 22 das Joch 16 und der Stabilisator 28 in einer Ebene liegen. Dies fördert insbesondere die Stabilisierung in Fahrtrichtung und quer zur Fahrtrichtung und ermöglicht auf der anderen Seite eine Verformung in vertikaler Richtung und gewährleistet dadurch eine optimale Bodenanpassung..

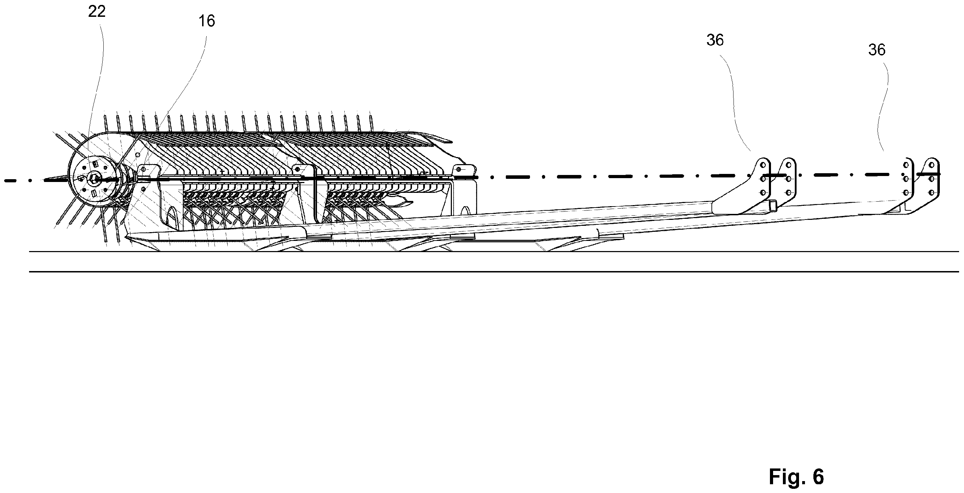

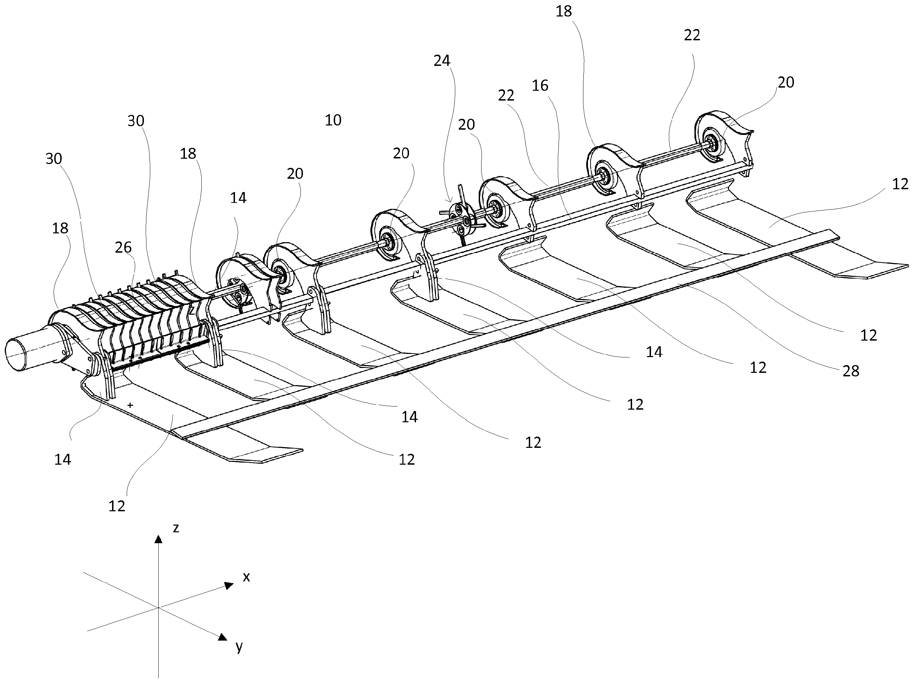

Fig. 6 zeigt die Darstellung eines Erntegutaufnehmers, welcher über Verbindungsmittel 36 mit einem festen Rahmen verbunden wird und entsprechend den Erntegutaufnehmer stabilisiert. Die eingezeichnete Linie verdeutlicht auch hier, dass eine Stabilisierung durch die Verbindungselemente 36 erreicht wird, wobei trotzdem eine Verformung in vertikaler Richtung gewährleistet ist, da die Welle 22 und das Joch 16 in der gleichen Ebene wie die Verbindungsmittel liegen.

### Bezugszeichenliste

- 10: Erntegutaufnehmer
- 12: Kufe
- 14: Lagerbock
- 16: Joch
- 18: Tragelement
- 20: Wellenlager
- 22: Welle
- 22a: Wellenteil
- 22b: Wellenteil
- 24: Aufnahmewerkzeug
- 26: Segment
- 28: Stabilisator
- 30: Abstreifer
- 32: Zinkenscheibe
- 34: Zinken

## Patentansprüche

1. Erntegutaufnehmer (10), mit wenigstens drei Fortbewegungsmitteln (12) und mit zumindest einem Joch (16), welches die Fortbewegungsmittel (12) verbindet, wobei ferner Tragelemente (18) vorgesehen sind, die mit dem Joch (16) und den Fortbewegungsmitteln (12) verbunden sind und ein Wellenlager (20) aufweisen, in welchen eine Welle (22) geführt ist, mit der Aufnahmewerkzeuge (24) zur Erntegutförderung verbunden sind, wobei zwischen zwei äußeren Fortbewegungsmitteln (12) wenigstens ein weiteres Fortbewegungsmittel (12) vorgesehen ist, **dadurch gekennzeichnet, dass** das Joch (16) derart elastisch verformbar ist, dass eine Relativbewegung des weiteren Fortbewegungsmittels (12) gegenüber den äußeren Fortbewegungsmitteln (12) in vertikaler Richtung zur Achse des Jochs (16) möglich ist.

2. Erntegutaufnehmer nach Anspruch 1, **dadurch gekennzeichnet, dass** die Tragelemente (18) am Joch und / oder am Fortbewegungsmittel (12) befestigt sind.

3. Erntegutaufnehmer nach Anspruch 1 oder 2, **dadurch gekennzeichnet, dass** das Joch (16) eine elastische Verformungseigenschaft aufweist, die eine Durchbiegung von wenigstens 2 cm in Mittellage des Jochs (16) mit einer Gesamtlänge von 3m in vertikaler Richtung zur Jochachse ermöglicht.

4. Erntegutaufnehmer nach einem der Ansprüche 1 bis 3, **dadurch gekennzeichnet, dass** ein einziges elastisch verformbares Joch (16) die Fortbewegungsmittel (12) verbindet.

5. Erntegutaufnehmer nach einem der Ansprüche 1 bis 4, **dadurch gekennzeichnet, dass** die elastische Verformbarkeit des Jochs (16) durch Querschnitts- und Materialwahl verwirklicht ist.

6. Erntegutaufnehmer nach einem der vorangehenden Ansprüche, **dadurch gekennzeichnet, dass** die Welle (22) als elastisch verformbare Welle ausgebildet ist.

7. Erntegutaufnehmer nach einem der vorangehenden Ansprüche, **dadurch gekennzeichnet, dass** die Welle aus einzelnen Wellenteilen (22a, 22b) gebildet ist.

8. Erntegutaufnehmer nach einem der vorangehenden Ansprüche, **dadurch gekennzeichnet, dass** an dem Joch (16) Abstreifer (30) befestigt sind, die zwischen axial benachbarten Aufnahmewerkzeugen (24) angeordnet sind.

9. Erntegutaufnehmer nach Anspruch 8, **dadurch gekennzeichnet, dass** die Abstreifer (30) einzeln oder in Gruppen an dem Joch (16) befestigt sind.

10. Erntegutaufnehmer nach einem der vorangehenden Ansprüche, **dadurch gekennzeichnet, dass** die Aufnahmewerkzeuge (24) einzeln oder in Gruppen an der Welle (22) befestigt sind.

11. Erntegutaufnehmer nach einem der vorangehenden Ansprüche, **dadurch gekennzeichnet, dass** das Joch (16) als Flachprofil, insbesondere als mehrlagiges Flachprofil ausgebildet ist.

12. Erntegutaufnehmer nach einem der vorangehenden Ansprüche, **dadurch gekennzeichnet, dass** die Fortbewegungsmittel als Kufen (12) ausgebildet ist.

13. Erntegutaufnehmer nach einem der vorangehenden Ansprüche, **dadurch gekennzeichnet, dass** die Aufnahmewerkzeuge (24) als Zinkenscheiben (32) ausgebildet sind, die Zinken (34) aufweisen.

14. Erntegutaufnehmer nach einem der vorangehenden Ansprüche, **dadurch gekennzeichnet, dass** die Welle, das Joch (16) und wenigstens ein Abstützpunkt (36) eines den Erntegutaufnehmer führenden Rahmens im Wesentlichen in einer Ebene liegen.

15. Erntegutaufnehmer nach einem der vorangehenden Ansprüche, **dadurch gekennzeichnet, dass** ein Stabilisator (28) vorgesehen ist, der im Wesentlichen in einer Ebene mit Welle (22) und Joch (16) liegt.

## Claims

1. Harvested crop pick-up (10) having at least three means (12) for moving it and at least one yoke (16) that interconnects said movement means (12), with supporting elements (18) being furthermore provided that are connected to said yoke (16) and said movement means (12) and that include a shaft bushing (20) in which a shaft (22) is supported to which pick-up tools (24) for picking up harvested material are connected, with at least one additional movement means (12) being provided between two outer movement means (12), **characterized in that** said yoke (16) can be elastically deformed so as to allow a relative movement of said additional movement means (12) with respect to said outer movement means (12) in a vertical direction relative to the axis of said yoke (16).

2. Harvested crop pick-up according to claim 1, **characterized in that** said supporting elements (18) are mounted on said yoke and/or on said movement means (12).

3. Harvested crop pick-up according to claims 1 or 2, **characterized in that** said yoke (16) is capable of elastic deformation to an extent which allows it to bend by at least 2 cm in the central position of said yoke (16) having a total length of 3m in the vertical direction relative to the yoke axis.

4. Harvested crop pick-up according to one of claims 1 to 3, **characterized in that** a single elastically deformable yoke (16) interconnects said movement means (12).

5. Harvested crop pick-up according to one of claims 1 to 4, **characterized in that** the elastic deformability of said yoke (16) is accomplished through appropriate choice of its cross-section and its material.

6. Harvested crop pick-up according to one of the preceding claims, **characterized in that** said shaft (22) is provided in the form of an elastically deformable shaft.

7. Harvested crop pick-up according to one of the preceding claims, **characterized in that** the shaft (22) is formed of individual shaft parts (22a, 22b).

8. Harvested crop pick-up according to one of the preceding claims, **characterized in that** strippers (30) are mounted on said yoke (16), which strippers (30) are located between axially adjacent pick-up tools (24).

9. Harvested crop pick-up according to claim 8, **characterized in that** said strippers (30) are mounted on said yoke (16) individually or in groups.

10. Harvested crop pick-up according to one of the preceding claims, **characterized in that** said pick-up tools (24) are mounted on said shaft (22) individually or in groups.

11. Harvested crop pick-up according to one of the preceding claims, **characterized in that** said yoke (16) is in the form of a flat section, in particular a multi-layer flat section.

12. Harvested crop pick-up according to one of the preceding claims, **characterized in that** said movement means are designed as skids (12).

13. Harvested crop pick-up according to one of the preceding claims, **characterized in that** said pick-up tools (24) are designed as tined disks (32) which comprise tines (34).

14. Harvested crop pick-up according to one of the preceding claims, **characterized in that** said shaft, said yoke (16) and at least one support point (36) of a frame guiding said collector essentially extend in the same plane.

15. Harvested crop pick-up according to one of the preceding claims, **characterized in that** a stabilizer (28) is provided which essentially extends in the same plane as said shaft (22) and said yoke (16).

## Revendications

1. Récolteuse (10), comprenant au moins trois moyens d'avancement (12) et au moins un joug (16), lequel relie les moyens d'avancement (12), dans laquelle des éléments de support (18) sont en outre prévus, qui sont reliés au joug (16) et aux moyens d'avancement (12) et présentent un palier d'arbre (20) dans lequel un arbre (22) est guidé, auquel sont reliés des outils de réception (24) pour le transport de la récolte, dans laquelle au moins un moyen d'avancement (12) supplémentaire est prévu entre deux moyens d'avancement (12) extérieurs, **caractérisée en ce que** le joug (16) est déformable élastiquement, de telle manière qu'un mouvement relatif du moyen d'avancement (12) supplémentaire par rapport aux moyens d'avancement (12) extérieurs dans le sens vertical par rapport à l'axe du joug (16) est possible.

2. Récolteuse selon la revendication 1, **caractérisée en ce que** les éléments de support (18) sont fixés au joug et/ou au moyen d'avancement (12).

3. Récolteuse selon la revendication 1 ou 2, **caractérisée en ce que** le joug (16) présente une propriété de déformation élastique qui permet un fléchissement d'au moins 2 cm dans la position centrale du joug (16) d'une longueur totale de 3 m dans le sens vertical par rapport à l'axe du joug.

4. Récolteuse selon l'une quelconque des revendications 1 à 3, **caractérisée en ce qu'**un seul joug (16) déformable élastiquement relie les moyens d'avancement (12).

5. Récolteuse selon l'une quelconque des revendications 1 à 4, **caractérisée en ce que** la déformabilité élastique du joug (16) est mise en oeuvre par la sélection de la section transversale et du matériau.

6. Récolteuse selon l'une quelconque des revendications précédentes, **caractérisée en ce que** l'arbre (22) est réalisé sous la forme d'un arbre déformable élastiquement.

7. Récolteuse selon l'une quelconque des revendications précédentes, **caractérisée en ce que** l'arbre est formé de différentes parties d'arbre (22a, 22b).

8. Récolteuse selon l'une quelconque des revendications précédentes, **caractérisée en ce que** des racloirs (30), qui sont agencés entre des outils de réception (24) axialement voisins, sont fixés au joug (16).

9. Récolteuse selon la revendication 8, **caractérisée en ce que** les racloirs (30) sont fixés individuellement ou en groupes au joug (16).

10. Récolteuse selon l'une quelconque des revendications précédentes, **caractérisée en ce que** les outils de réception (24) sont fixés individuellement ou en groupes à l'arbre (22).

11. Récolteuse selon l'une quelconque des revendications précédentes, **caractérisée en ce que** le joug (16) est réalisé sous la forme d'un profilé plat, en particulier sous la forme d'un profilé plat multicouche.

12. Récolteuse selon l'une quelconque des revendications précédentes, **caractérisée en ce que** les moyens d'avancement sont réalisés sous la forme de patins (12).

13. Récolteuse selon l'une quelconque des revendications précédentes, **caractérisée en ce que** les outils de réception (24) sont réalisés sous la forme de disques à pointes (32) qui présentent des pointes (34).

14. Récolteuse selon l'une quelconque des revendications précédentes, **caractérisée en ce que** l'arbre, le joug (16) et au moins un point d'appui (36) d'un cadre guidant la récolteuse se situent sensiblement dans un plan.

15. Récolteuse selon l'une quelconque des revendications précédentes, **caractérisée en ce qu'**un stabilisateur (28) est prévu, qui se situe sensiblement dans un plan avec l'arbre (22) et le joug (16).
